# EUROPEAN PATENT SPECIFICATION

(11) **EP 3 301 855 B1**
(45) Date of publication and mention of the grant of the patent: **27.03.2019**
(21) Application number: 17194003.4
(22) Date of filing: 29.09.2017
(51) Int. Cl.: H04L 12/12, H04L 12/933, H04L 12/931, G06F 13/40, H04B 10/40, H04L 12/935, G02B 6/42

(54) **NETWORK SWITCHES CONFIGURED TO EMPLOY OPTICAL OR ELECTRICAL INTERFACES**
NETZWERKSCHALTER, DIE ZUR VERWENDUNG OPTISCHER ODER ELEKTRISCHER SCHNITTSTELLEN KONFIGURIERT SIND
COMMUTATEURS DE RÉSEAU CONFIGURÉS POUR EMPLOYER DES INTERFACES OPTIQUES OU ÉLECTRIQUES

(30) Priority: 30.09.2016 US 201662402751 P; 26.09.2017 US 201715716454; 27.09.2017 WO PCT/US2017/053640
(43) Date of publication of application: 04.04.2018
(73) Proprietor: Facebook, Inc., Menlo Park, CA 94025 (US)
(72) Inventor: SCHMIDTKE, Katharine Emily, Menlo Park, California 94025 (US)
(74) Representative: Schröer, Gernot H.

(56) References cited:
- US-A1- 2005 105 910
- US-A1- 2005 276 607
- US-A1- 2014 169 785

## Description

### TECHNICAL FIELD

Various embodiments pertain to network switch devices and, more specifically, to network switch devices having one or more interfaces able to use different electrical voltages or electrical currents. The invention relates in particular to a network switch and a method for manufacturing network switches.

### BACKGROUND

Data centers can house many hundreds of computing devices for the remote storage, processing, and/or distribution of data. For example, data centers associated with social networks may house many thousands of computer servers due to the high volume of data handled by social networks. These computing devices can be interconnected to themselves and client computing device(s) via various communications networks. For example, the computing devices may be connected to one another via an intranet, and to the client computing device(s) via the Inter-net.

Data networks allow networked computing devices to exchange data with each other using a data link. A data network may include many hundreds of networked computing devices that are connected to one another using either cable media or wireless media. Examples of networked computing devices include network switches, routers, modems, repeaters, bridges, etc.

A network switch is a computer networking device that connects other devices together on a computer network. Network switches may also be known as "switching hubs," "bridging hubs," "MAC bridges," or simply "switches." Switches are typically used in complex data networking environments to, for example, interconnect various devices within one or more subnetworks. Some switches use packet switching to receive, process, and forward data to the appropriate destination device(s). Switches could also be used for electrical switching, optical switching (which enables signals in optical fibers or integrated optical circuits to be selectively switched from one circuit to another), or a combination of electrical and optical switching.

Conventional switches include multiple printed circuit boards with associated switch circuitry whose components are interconnected via backplane circuit boards or midplane circuit boards within an enclosure. Examples of associated switch circuitry include line cards and fabric cards (collectively referred to as "cards"). A processor (also referred to as a "switch chip") can route messages or data packets between various cards. Switch chips are often implemented as application-specific integrated circuits (ASICs) that provide switch-related logic.

Both line cards and fabric cards can interconnect with computing devices via switch interfaces (also referred to simply as "interfaces"). For example, fiber optic cables can interconnect with optical interfaces, while copper-based cables can interconnect with electrical interfaces. One commonly used interface type is a small form-factor pluggable (SFP) transceiver. SFP transceivers provide computer networking devices with a modular interface that can be easily adapted to various fiber optic and copper networking standards. Accordingly, an SFP transceiver may interface the printed circuit board of a computer networking device with an optical cable or an electrical cable.

US 2014/0169785 A1 discloses a smart Small Form-Factor Pluggable (SSFP) receiver comprising an optical transceiver, an electrical connector and Electronically Erasable Programmable Read-Only Memory (EEPROM). The SSFP transceiver further comprises a protocol processing engine, a Central Processing Unit (CPU), flash memory, Serializer/Deserializer, power manager and LED module. The power manager monitors power usage by components of the SSFP transceiver. The power manager also performs DC/DC voltage conversion from a voltage level provided via the electrical connector to a voltage level used by components such as the protocol processing engine. The CPU and protocol processing engine operate to keep the electrical power usage by the SSFP transceiver at or below a pre-determined level.

US 2005/0276607 A1 discloses an opto-electronic transceiver having a transmission device, a reception device, a voltage converter, an optical port for coupling two optical fibers to it and an electrical port for making electrical contact with a plug-in transceiver.

US 2005/0105910 A1 discloses an optical transceiver including a housing within which is arranged a pair of Optical Sub-Assemblies (OSAs). The OSAs are mounted to a transceiver substrate, which exemplarily takes the form of a printed circuit board. The transceiver substrate further includes a connector configured to electrically and mechanically interface with a corresponding connector or receptacle of a Host Bus Adaptor (HBA).

### SUMMARY OF PARTICULAR EMBODIMENTS

The invention provides a network switch as defined in claim 1 and a method of manufacturing network switches as defined in claim 9. Embodiments according to the invention are in particular disclosed in the attached claims directed to a network switch and a method for manufacturing network switches, wherein any feature mentioned in one claim category, e.g. system, can be claimed in another claim category, e.g. method, storage medium, and computer program product, as well. The dependencies or references back in the attached claims are chosen for formal reasons only. However any subject matter resulting from a deliberate reference back to any previous claims (in particular multiple dependencies) can be claimed as well, so that any combination of claims and the features thereof is disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

According to the invention, the network switch comprises:
an optical interface;
an electrical interface; and
a processor operatively coupled to the optical interface and the electrical interface,
wherein the optical interface and the electrical interface consume different amounts of electrical power despite sharing an identical power pin position.

The optical interface may include a voltage transformer circuit configured to step down voltage received at a power pin.

The electrical interface may include a voltage transformer circuit configured to step up voltage received at a power pin.

In an embodiment according to the invention, the network switch may comprise:
a printed circuit board including a power component configured to controllably supply power to the first power pin of the optical interface and the second power pin of the electrical interface.

The power component may be configured to:
supply a first voltage to the optical interface via the first power pin; and
supply a second voltage to the electrical interface via the second power pin,
wherein the first voltage is different than the second voltage.

The electrical interface may include a voltage transformer circuit.

The power component may be configured to:
supply a first current to the optical interface via the first power pin; and
supply a second current to the electrical interface via the second power pin,
wherein the first current is different than the second current.

The electrical interface may include a current boost circuit.

In an embodiment according to the invention, a network switch may comprise:
a substrate onto which the optical interface and the electrical interface are mounted,
wherein the substrate is fixedly attached to the printed circuit board.

In an embodiment according to the invention, a network switch may comprise:
a processor configured with a routing table to connect each of the optical interface and the electrical interface with at least one other interface.

The substrate may include:
a first electrical trace that electrically interconnects the processor and the optical interface; and
a second electrical trace that electrically interconnects the processor and the electrical interface.

The first electrical trace and the second electrical trace may be embedded within the substrate.

According to the invention, the method for manufacturing network switches having one or more interfaces that are interoperable with optical interfaces and electrical interfaces, comprises:
receiving a substrate suitable for electrically separating items mounted thereon;
mounting a processor to the substrate;
mounting an optical interface to the substrate;
electrically interconnecting the optical interface to the processor using a first electrical trace;
mounting an electrical interface to the substrate; and
electrically interconnecting the electrical interface to the processor using a second electrical trace;
wherein the optical interface and the electrical interface share an identical power pin position.

The first electrical trace or the second electrical trace may be at least partially exposed through the substrate.

In an embodiment according to the invention, a method may comprise:
installing a voltage transformer circuit on the optical interface,
wherein the voltage transformer circuit is configured to step down voltage received at a power pin.

In an embodiment according to the invention, a method may comprise:
installing a voltage transformer circuit on the electrical interface,
wherein the voltage transformer circuit is configured to step up voltage received at a power pin.

In an embodiment according to the invention, a method may comprise:
installing a current boost circuit on the optical interface,
wherein the current boost circuit is configured to boost current received at a power pin.

The optical interface and the electrical interface may consume substantially identical amounts of electrical power because the second electrical trace is shorter than the first electrical trace.

### BRIEF DESCRIPTION OF THE DRAWINGS

Embodiments of network switch modules having interfaces designed to enable use of different voltages or currents (also referred to herein as simply "the embodiments") are illustrated by way of example and not limitation in the drawings, in which like references may indicate similar elements. Various features of the embodiments will become more apparent to those skilled in the art from a study of the Detailed Description in conjunction with the drawings.
- Figure 1: is a schematic diagram illustrating an example communication flow between an origination computing device and a destination computing device via a network switch.
- Figure 2: is a schematic diagram of a substrate that includes front-side ports, back-side ports, and a switch chip.
- Figure 3: is a side elevation view diagram of a printed circuit board for a switch, consistent with various embodiments.
- Figure 4A: is a plan view diagram of a printed circuit board and substrate similar to the printed circuit board and substrate of Figure 3, not in accordance with the invention.
- Figure 4B: is a plan view diagram of a printed circuit board and substrate similar to the printed circuit board and substrate of Figure 3.
- Figure 5: depicts a process for manufacturing network switch modules having interfaces designed to enable use of different voltages or currents.

The drawings depict various embodiments for the purpose of illustration only. Those skilled in the art will recognize that alternative embodiments may be employed without departing from the principles of the technology.

### DETAILED DESCRIPTION

As data centers become more complex and additional computing devices and/or networking devices are added to the data centers, the power demand concomitantly increases. A maximum power capability may exist in some locations. For example, it may become impossible for a local power supplier (e.g., a power utility) to supply enough electrical power without investing in additional power generation stations. To cope with increasing data center complexity and/or computing/networking device capacity, data center operators have begun to look for ways to reduce power utilization so that the data center does not exceed the available electrical power. One opportunity to reduce power utilization is by making individual networking devices more energy efficient.

Any electrical path has an associated signal loss caused by various electrical properties of the path (e.g., resistance). For example, an electrical trace of a printed circuit board has a signal loss that is proportional to the length of the electrical trace. Similarly, a wire has a signal loss that is proportional to the length of the wire. Thus, the longer a trace or wire, the greater the signal loss. Signal loss typically manifests itself as data integrity issues. To overcome these signal losses, switch designers can reduce the length of the trace(s) or wire(s), improve the quality of the conductor(s), or increase electrical power.

Switch designers may also attempt to reduce the costs associated with manufacturing switches. One way to do so is to commoditize as many switch components as possible. For example, switches may employ "drop-in" cards that are interoperable with other similar cards. As another example, switch chips can be designed such that they are interoperable with both optical interfaces and electrical interfaces. Cards typically have optical interface(s), electrical interface(s), or both types of interface. However, because optical interfaces can have different electrical power requirements than electrical interfaces, cards are pre-designed to be specifically adapted for the type of interface the cards are intended to be used with. But this reduces manufacturers' ability to commoditize the cards.

Introduced here, therefore, are several embodiments of network switch modules having interfaces designed to enable use of different voltages or currents. Accordingly, a network switch may be able to support both optical interfaces and electrical interfaces on the same printed circuit board (e.g., a line card or a fabric card). In some embodiments, the printed circuit board includes a "booster stage" electrical interface that is designed for optical interfaces. Such a design enables the components of a switch to operate with both electrical interfaces and optical interfaces.

### Terminology

Brief definitions of terms, abbreviations, and phrases used throughout the specification are given below.

References to "one embodiment" or "an embodiment" means that the particular feature, structure, or characteristic described in connection with the embodiment is included in at least one embodiment. Occurrences of such phrases are not necessarily referring to the same embodiment, nor are they necessarily referring to alternative embodiments that are mutually exclusive of one another. Moreover, various features are described that may be exhibited by some embodiments but not others.

Unless the context clearly requires otherwise, the words "comprise" and "comprising" are to be construed in an inclusive sense rather than an exclusive or exhaustive sense (i.e., in the sense of "including but not limited to"). The terms "connected," "coupled," or any variant thereof is intended to include any connection or coupling, either direct or indirect, between two or more elements. The coupling/connection can be physical, logical, or a combination thereof. For example, two devices may be electrically or communicatively coupled to one another despite not sharing a physical connection.

Where the context permits, words used in the singular sense or the plural sense may also be used in the plural sense or the singular sense, respectively. When used in reference to a list of multiple items, the word "or" is intended to cover all of the following interpretations: any of the items in the list, all of the items in the list, and any combination of items in the list. If the specification states that a component/feature "may," "can," "could," or "might" be included or have a characteristic, that particular component/feature is not required to be included of have the characteristic in every embodiment.

### System Topology Overview

Some data networking environments use switches with optical interconnects (also referred to as "optical switches") that employ fiber optic cables as a physical communication medium. Optical switches can house multiple cards that each receive communications from connected computing devices via one or more ports. For example, a card may have 32 ports. The ports can include front-side ports and/or back-side ports.

Front-side ports are typically used to connect to computing devices. For example, a computer server may employ a fiber optic cable to send or receive data packets to or from a line card. In such a scenario, one end of the fiber optic cable connects to a front-side port of the line card and the other end of the fiber optic cable connects to the fiber optic port interface of a data networking card of the computer server (or a different higher-level switch of the network). Back-side ports are typically used to interconnect line cards or other switches (e.g., via fabric cards).

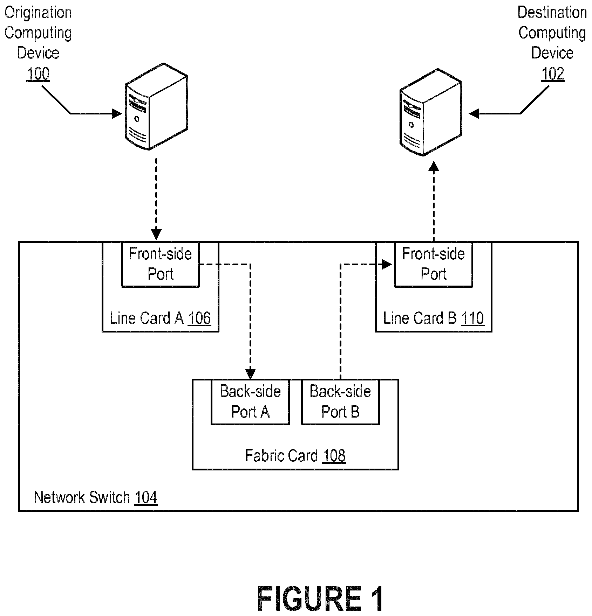

Figure 1 is a schematic diagram illustrating an example communication flow between an origination computing device 100 and a destination computing device 102 via a network switch 104. The origination computing device 100 and the destination computing device 102 may be, for example, computer servers.

When the origination computing device 100 and the destination computing device 102 exchange communications via the switch 104, the corresponding data packets may travel along a specified path. Here, for example, data packets travel from the origination computing device 100 to a front-side port of a first line card 106. The first line card 106 can route the data packets to a first back-side port of a fabric card 108. After leaving the fabric card 108 via a second back-side port, the data packets may travel to a second line card 110, which routes the data packets to the destination computing device 102 via a front-side port.

These front-side ports and back-side ports (collectively referred to as "ports" or "interfaces") can be electrical or optical. However, electrical interfaces often require a different amount of electrical power than optical interfaces. Thus, a printed circuit board for a card is generally designed specifically for the type of interface that will be installed.

Each card may also include one or more processors (also referred to as "switch chips," "integrated circuits," or simply "chips") that provide switch-related logic. For example, a switch chip may create connections between the front-side ports and the back-side ports of a switch. More specifically, a switch chip may be configured with a routing table to interconnect various cards and their ports. Switch chips are typically implemented as application-specific integrated circuits (ASICs).

To reduce the power needed to overcome signal loss, several different design mechanisms can be employed. For example, the front-side ports and/or the back-side ports can be moved closer to the switch chip. By doing so, less energy is needed between the interfaces and the switch chip to address signal loss.

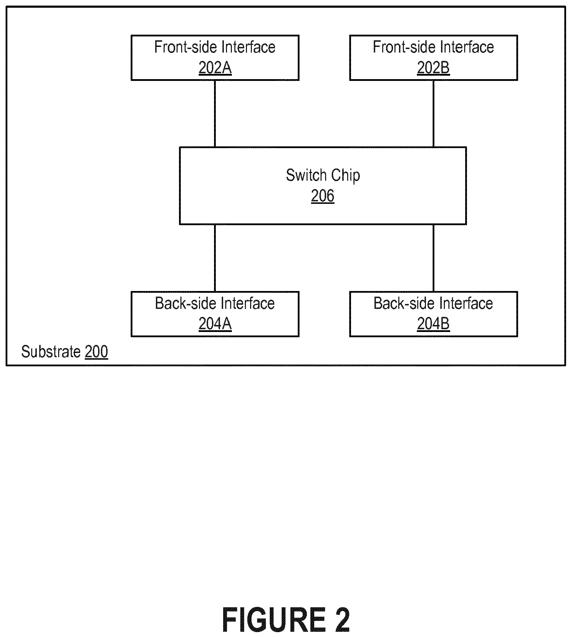

Another way to reduce the required electrical power is to employ a common substrate over which the front-side port(s), back-side port(s), and switch chip are manufactured. Figure 2 is a schematic diagram of a substrate 200 that includes front-side ports 202A-B, back-side ports 204A-B, and a switch chip 206. The substrate 200 could include any number of front-side ports 202A-B and/or back-side ports 204A-B. A module manufactured with these three types of components may be referred to as an "optimized switch controller."

An optimized switch controller can reduce (e.g., minimize) the number and/or length of traces required to interconnect these components by placing the traces on or within the substrate 200. For example, in some embodiments the traces may be embedded within the substrate 200, while in other embodiments the traces may be exposed along the surface of the substrate 200. The substrate 200 may be comprised of a ceramic or another common substrate material suitable for electrically separating the components. In some embodiments, the substrate 200 is not required. In such embodiments, the components may be mounted directly onto a printed circuit board with traces to interconnect the components.

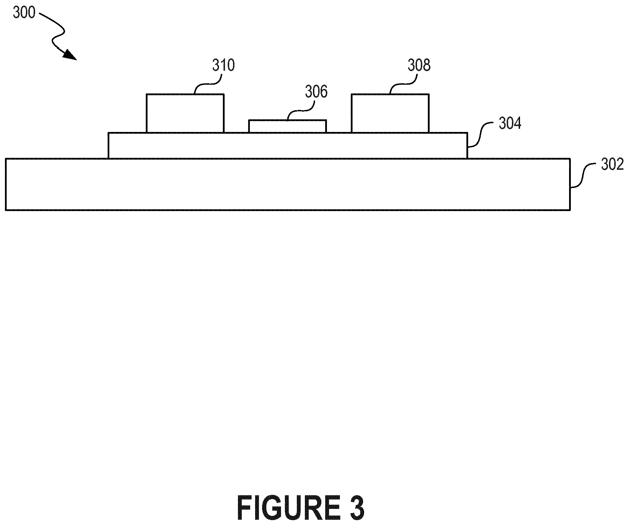

Figure 3, meanwhile, is a side elevation view diagram of a printed circuit board for a switch, consistent with various embodiments. A switch housing (not shown) can include various components 300. These components 300 can include one or more printed circuit boards 302 (e.g., line cards or fabric cards). Those skilled in the art will recognize that although printed circuit boards can include various components, only those pertinent to the disclosed innovations are illustrated in Figure 3. Consequently, other common components are not illustrated.

The printed circuit board 302 can include a substrate 304. Various types of substrates can be used to electrically separate components. For example, some substrates are dielectric composite materials. The composite materials can include a matrix (e.g., an epoxy resin), a reinforcement (e.g., glass fibers or paper), and/or a resin (e.g., a ceramic).

The substrate 304 can include one or more traces (not shown) that electrically interconnect various components. Traces may be outwardly-exposed along the surface of the substrate 304 or embedded within the substrate 304 (e.g., as part of a multi-layer PC board). Here, for example, traces are used to interconnect three components: a switch chip 306, a first interface 308, and a second interface 310.

The first interface 308 can be a front-side port or a back-side port. Similarly, the second interface 310 can be a front-side port or a back-side port. The first interface 308 and the second interface 310 can be electrical interfaces or optical interfaces. As noted above, these components (e.g., the switch chip 306, first interface 308, second interface 310, and, in some embodiments, substrate 304) may collectively be referred to as an "optimized switch controller."

Several different versions of the optimized switch controller can be manufactured. For example, one version of the optimized switch controller includes an optical interface, while another version of the optimized switch controller includes an electrical interface. All other components of the optimized switch controllers may otherwise be similar or identical.

These interfaces may be manufactured with similar connector configurations (e.g., pinouts) to simplify the manufacturing process and reduce costs. For example, an optimized switch controller may include two interfaces: an optical front-side port and an electrical back-side port. The electrical back-side port would employ the power necessary for electrical (back-side) interfaces. However, if an optical back-side port were installed, the optical back-side port would employ the power necessary for optical (back-side) interfaces.

There are several principal ways to ensure an interface receives the appropriate amount of power.

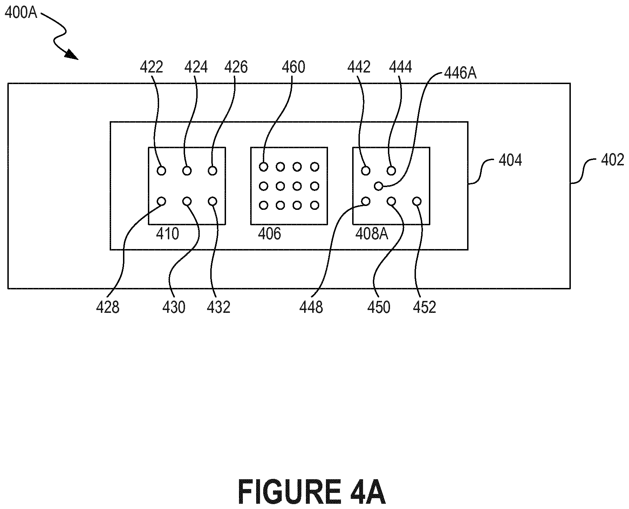

First, a power component can vary the power supplied at different voltage pins (or power pins) of the interface. Figure 4A is a plan view diagram of a printed circuit board 402 and substrate 404 similar to the printed circuit board 302 and substrate 304 of Figure 3. The components 400A may be largely identical to the components 300 of Figure 3. Thus, switch chip 406, interface 408A, and interface 410 of Figure 4A may correspond to switch chip 306, first interface 308, and second interface 310 of Figure 3.

Switch chip 406 can include multiple pins 460. These pins 460 can include signaling pins and/or voltage pins. For example, the pins 460 may be used to interconnect interface 408A with interface 410.

Interface 410 can include pins 422, 424, 426, 428, 430, and 432. These pins can also include signaling pins and/or voltage pins. For example, pin 426 may be a voltage pin configured to receive a first voltage from a cable (e.g., a fiber optic cable or a copper-based cable) connected to interface 410.

Interface 408A can include pins 442, 444, 446A, 448, 450, and 452. These pins can also include signaling pins and/or voltage pins. Here, for example, pin 446A is a voltage pin configured to receive a second voltage from a cable (e.g., a fiber optic cable or a copper-based cable) connected to interface 408A. However, the second voltage received at pin 446A of interface 408A may be different than the first voltage received at pin 426 of interface 410.

If interface 408A is replaced with a new interface similar to interface 410 (e.g., having the same pinout as interface 410), then the new interface would function as designed because the voltage pin of the new interface would be in the same position as pin 426 of interface 410 (and thus in a different position than voltage pin 446A of interface 408A). Thus, the new interface can receive the necessary electrical power at its own voltage pin.

Thus, in alternatives to the invention having different voltage pins, an interface can be manufactured with a first voltage pin positioned at a first position and a second voltage pin positioned at a second position. The first voltage pin may correspond to electrical interfaces, and the second voltage pin may correspond to optical interfaces. In such embodiments, the printed circuit board could controllably supply power to both voltage pins. More specifically, the printed circuit board may supply different levels of power to the different pin positions via separate traces.

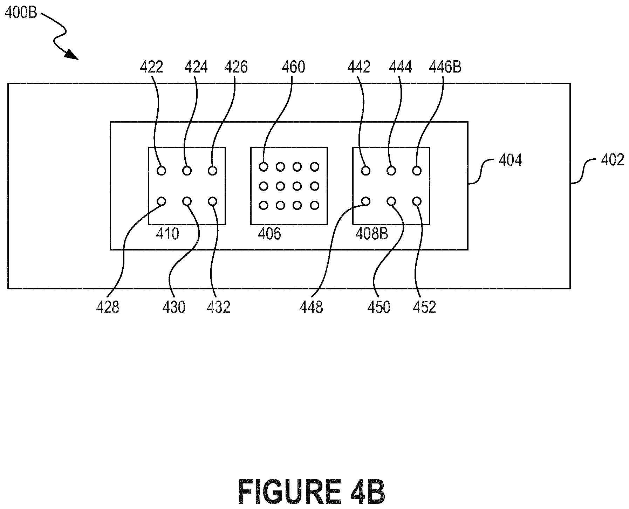

Second, a power transformer module can be added to the interface. Figure 4B is a plan view diagram of a printed circuit board 402 and substrate 404 similar to the printed circuit board 302 and substrate 304 of Figure 3. Again, the components 400B may be largely identical to the components 300 of Figure 3. Thus, switch chip 406, interface 408B, and interface 410 of Figure 4B may correspond to switch chip 306, first interface 308, and second interface 310 of Figure 3.

The components 400B of Figure 4B are similar to the components 400A of Figure 4A. In Figure 4B, however, voltage pin 446B of interface 408B is in the same position as voltage pin 426 of interface 410. Accordingly, interface 408B and interface 410 function at the same voltage level. If interface 408B and interface 410 are of different types (e.g., one is an electrical interface, while the other is an optical interface), then at least one of the interfaces 408B, 410 may include a power transformer module (not shown). A power transformer module may be, for example, a voltage transformer circuit able to either step up the voltage or step down the voltage received by the corresponding interface. In other embodiments, interface 408B and interface 410 consume different amounts of electrical power despite having the same relative pin positions.

In some embodiments, the voltage is constant but different amounts of current are required to overcome the resistance of the conductor lengths (e.g., trace lengths and/or cable lengths). In such embodiments, the interface may include a boost circuit (not shown) to draw additional current from the power component.

Thus, in embodiments having at least one power transformer module, either a step-down voltage transformer circuit or a step-up voltage transformer circuit could be added to the power transceiver of the interface. For example, an optical interface may include a voltage transformer configured to step down electrical power received at a voltage pin by reducing the voltage. In another embodiment, the current can be reduced. As another example, an electrical interface may include a voltage transformer circuit configured to step up electrical power received at a voltage pin by increasing the voltage or current. In some embodiments, multiple voltage transformer circuits are added to the power transceiver of the interface. One or more power transformer modules may be added, as necessary, to supply the power required by the power transceiver.

Third, an interface may employ a combination of the first and second options. For example, in some embodiments the power requirements for electrical interfaces and optical interfaces may be the same or substantially similar. In such embodiments, the pin configurations for the interfaces can be identical. An electrical interface may require the same amount of electrical power as an optical interface because, for example, the electrical interface is positioned closer to the switch chip than the optical interface. Such placement reduces the length of the electrical path between the switch chip and the electrical interface, thereby reducing signal loss. In yet other embodiments, the power requirements for electrical interfaces and optical interfaces may be different, yet the interfaces may consume different amounts of power supplied via voltage pins at the same relative positions.

One benefit of the printed circuit board designs introduced here is that they enable manufacturers to commoditize nearly all components of a switch, which will aid in significantly reducing the costs of switches.

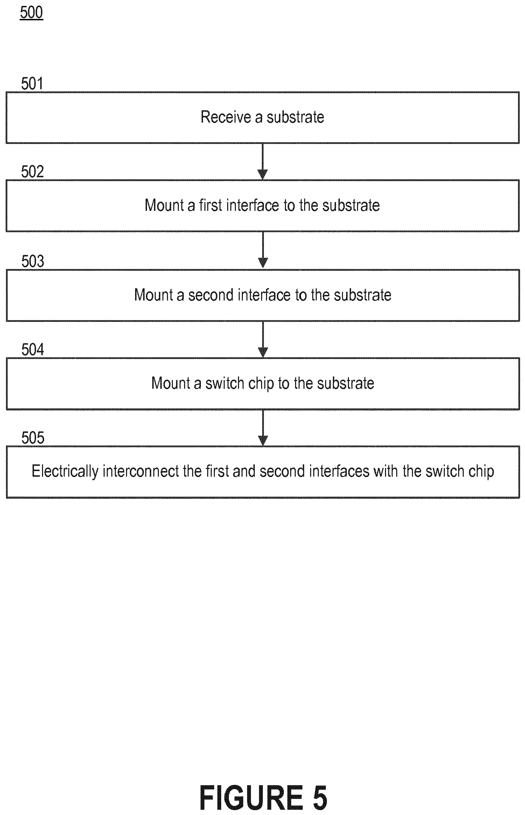

Figure 5 depicts a process 500 for manufacturing network switch modules having interfaces designed to enable the use of different voltages or currents. A manufacturer initially receives a substrate (step 501). The substrate may be comprised of a ceramic or another common substrate material suitable for electrically separating items mounted thereon. The substrate is generally designed/selected such that the substrate can be affixed to a printed circuit board to be used within a switch.

The manufacturer can mount a first interface to the substrate (step 502). The manufacturer can also mount a second interface to the substrate (step 503). The first interface and the second interface can be electrical interfaces or optical interfaces. Fiber optic cables can interconnect with optical interfaces, while copper-based cables can interconnect with electrical interfaces.

The manufacturer can then mount a switch chip to the substrate (step 504). Switch chips are often implemented as application-specific integrated circuits (ASICs) that provide switch-related logic. The switch chip may be responsible for routing data packets between various interfaces included on the printed circuit board (e.g., between the first interface and the second interface). Thus, the manufacturer may electrically interconnect the first interface and the second interface with the switch chip using traces (step 505). In some embodiments the trace are embedded within the substrate, while in other embodiments the traces are at least partially exposed along the surface of the substrate.

As noted above, several different versions of the network switch modules can be manufactured.

One alternative to the network switch module includes a printed circuit board configured to controllably supply different levels of power to different pin positions via separate traces. For example, the printed circuit board may supply voltage to an electrical connector via a first voltage pin positioned at a first position and to an optical connector via a second voltage pin positioned at a second position. Network switch modules designed in such a manner can alter whether an interface acts as an electrical interface or an optical interface based on which voltage pin is currently receiving power.

A version of the network switch module includes a voltage transformer circuit added to the power transceiver of the interface. The voltage transformer may alter whether the interface acts as an electrical interface or an optical interface by modifying (or refraining from modifying) the power received at a voltage pin. For example, an optical interface may include a voltage transformer configured to step down the power received at the voltage pin. As another example, an electrical interface may include a voltage transformer circuit configured to step up the electrical power received at the voltage pin.

Unless contrary to physical possibility, it is envisioned that the steps described above may be performed in various sequences and combinations. For example, the first interface, second interface, and switch chip may be mounted to the substrate in any order. The substrate could also be received with certain components (e.g., the first interface and the second interface) already mounted in place.

Additional steps could also be included in some embodiments. For example, the manufacturer (or some other entity) may program a computing device to automate some or all of these steps. The computing device may be communicatively coupled to an automatic-placement machine (also referred to as a "pick-and-place machine") configured to automatically place and/or secure the components onto the substrate or a printed circuit board.

### Remarks

The foregoing description of various embodiments of the technology has been provided for the purposes of illustration and description. It is not intended to be exhaustive or to limit the claimed subject matter to the precise forms disclosed. Many modifications and variations will be apparent to one skilled in the art. Embodiments were chosen and described in order to best describe the principles of the technology and its practical applications, thereby enabling others skilled in the relevant art to understand the claimed subject matter, the various embodiments, and the various modifications that are suited to the particular uses contemplated.

Although the above Detailed Description describes certain embodiments and the best mode contemplated, no matter how detailed the above appears in text, the embodiments can be practiced in many ways. Details of the technology may vary considerably in its implementation details while still being encompassed by the specification. As noted above, particular terminology used when describing certain features or aspects of various embodiments should not be taken to imply that the terminology is being redefined herein to be restricted to any specific characteristics, features, or aspects of the technology with which that terminology is associated. In general, the terms used in the following claims should not be construed to limit the technology to the specific embodiments disclosed in the specification, unless those terms are explicitly defined herein.

The language used in the specification has been principally selected for readability and instructional purposes, and it may not have been selected to delineate or circumscribe the inventive subject matter. It is therefore intended that the scope of the technology not be limited by this Detailed Description, but rather by any claims that issue on an application based hereon. Accordingly, the disclosure of various embodiments is intended to be illustrative, but not limiting, of the scope of the technology.

## Claims

1. A network switch, comprising:
an optical interface (202A,202B;308;408B) configured to interconnect with a fiber optic cable and provided with a first power pin (446B);
an electrical interface (204A,204B;310;410) configured to interconnect with a copper-based cable and provided with a second power pin (426); and
a processor (206;306;406) operatively coupled to the optical interface (202A,202B;308;408B) and the electrical interface,
wherein the optical interface (202A,202B;308;408B) and the electrical interface (204A,204B;310;410) are configured to consume different amounts of electrical power and the first and second power pins (446B, 426) are provided at an identical power pin position (426,446B).

2. The network switch of claim 1, wherein the optical interface (202A,202B;308;408B) includes a voltage transformer circuit configured to step down voltage received at the first power pin (446B); and/or
wherein the electrical interface (204A,204B;310;410) includes a voltage transformer circuit configured to step up voltage received at the second power pin (426).

3. A network switch according to claim 1 or 2, further comprising:
a printed circuit board (302;402) including a power component configured to controllably supply power to the first power pin (446B) of the optical interface (308;408B) and the second power pin (426) of the electrical interface (310;410).

4. The network switch of claim 3, wherein the power component is configured to:
supply a first voltage to the optical interface (308;408B) via the first power pin (446B); and
supply a second voltage to the electrical interface (310;410) via the second power pin (426),
wherein the first voltage is different than the second voltage.

5. The network switch of any of claims 3 to 4, wherein the electrical interface (310;410) includes a voltage transformer circuit.

6. The network switch of any of claims 3 to 5, wherein the power component is configured to:
supply a first current to the optical interface (308;408B) via the first power pin (446B); and
supply a second current to the electrical interface (310;410) via the second power pin (426),
wherein the first current is different than the second current;
optionally wherein the electrical interface (310;410) includes a current boost circuit.

7. The network switch of any of claims 3 to 6, further comprising:
a substrate (200;304;404) onto which the optical interface (308;408B) and the electrical interface (310;410) are mounted,
wherein the substrate (200;304;404) is fixedly attached to the printed circuit board (302;402);
optionally further comprising:
a processor (206;306;406) configured with a routing table to connect each of the optical interface (308;408B) and the electrical interface (310;410) with at least one other interface.

8. The network switch of claim 7, wherein the substrate (200;304;404) includes:
a first electrical trace that electrically interconnects the processor (206;306;406) and the optical interface (308;408B); and
a second electrical trace that electrically interconnects the processor (206;306;406) and the electrical interface (310;410);
optionally wherein the first electrical trace and the second electrical trace are embedded within the substrate (200;304;404).

9. A method for manufacturing network switches (104) having one or more interfaces that are interoperable with optical interfaces and electrical interfaces, the method comprising:
receiving a substrate (200;304;404) suitable for electrically separating items mounted thereon;
mounting a processor (206;306;406) to the substrate (200;304;404);
mounting an optical interface (202A,202B;308;408B) to the substrate (200;304;404), wherein the optical interface (202A,202B;308;408B) is configured to interconnect with a fiber optic cable;
electrically interconnecting the optical interface (202A,202B;308;408B) to the processor (206;306;406) using a first electrical trace;
mounting an electrical interface (204A,204B;310;410) to the substrate (200;304;404), wherein the electrical interface (204A,204B;310;410) is configured to interconnect with a copper-based cable; and
electrically interconnecting the electrical interface (204A,204B;310;410) to the processor (206;306;406) using a second electrical trace;
wherein a first power pin (446B) of the optical interface (202A,202B;308;408B) and a second power pin (426) of the electrical interface (204A,204B;310;410) share an identical power pin position.

10. The method of claim 9, wherein the first electrical trace or the second electrical trace is at least partially exposed through the substrate (200;304;404).

11. The method of claim 9 or 10, further comprising:
installing a voltage transformer circuit on the optical interface (202A,202B;308;408B),
wherein the voltage transformer circuit is configured to step down voltage received at the first power pin (446B).

12. The method of any of claims 9 to 11, further comprising:
installing a voltage transformer circuit on the electrical interface (204A,204B;310;410),
wherein the voltage transformer circuit is configured to step up voltage received at the second power pin (426).

13. The method of any of claims 9 to 12, further comprising:
installing a current boost circuit on the optical interface (202A,202B;308;408B),
wherein the current boost circuit is configured to boost current received at a power pin (446B).

14. The method of any of claims 9 to 13, wherein the optical interface (202A,202B;308;408B) and the electrical interface (204A,204B;310;410) consume substantially identical amounts of electrical power because the second electrical trace is shorter than the first electrical trace.

## Patentansprüche

1. Netzwerkschalter, umfassend:
eine optische Schnittstelle (202A, 202B; 308; 408B), die konfiguriert ist, um sich mit einem faseroptischen Kabel zu verbinden, und die mit einem ersten Powerpin (446B) versehen ist;
eine elektrische Schnittstelle (204A, 204B; 310; 410), die konfiguriert ist, um sich mit einem kupferbasierten Kabel zu verbinden, und die mit einem zweiten Powerpin (426) versehen ist; und
einen Prozessor (206; 306; 406), die betriebsmäßig mit der optischen Schnittstelle (202A, 202B; 308; 408B) und der elektrischen Schnittstelle gekoppelt ist,
wobei die optische Schnittstelle (202A, 202B; 308; 408B) und die elektrische Schnittstelle (204A, 204B; 310; 410) konfiguriert sind, um verschiedene Mengen an elektrischer Leistung zu verbrauchen und der erste und der zweite Powerpin (446B, 426) an einer identischen Powerpinposition (426; 446B) bereitgestellt sind.

2. Netzwerkschalter nach Anspruch 1, wobei die optische Schnittstelle (202A, 202B; 308; 408B) eine Spannungswandlerschaltung beinhaltet, die konfiguriert ist, um Spannung, die an dem ersten Powerpin (446B) empfangen wird, abzuspannen; und/oder wobei die elektrische Schnittstelle (204A, 204B; 310; 410) eine Spannungswandlerschaltung beinhaltet, die konfiguriert ist, um Spannung, die an dem zweiten Powerpin (426) empfangen wird, aufzuspannen.

3. Netzwerkschalter nach Anspruch 1 oder 2, ferner umfassend:
eine gedruckte Leiterplatte (302; 402), die eine Leistungskomponente beinhaltet, die konfiguriert ist, um dem ersten Powerpin (446B) der optischen Schnittstelle (308; 408B) und dem zweiten Powerpin (426) der elektrischen Schnittstelle (310; 410) kontrollierbar Leistung zuzuführen.

4. Netzwerkschalter nach Anspruch 3, wobei die Leistungskomponente konfiguriert ist, um der optischen Schnittstelle (308; 408B) über den ersten Powerpin (446B) eine erste Spannung zuzuführen; und
der elektrischen Schnittstelle (310; 410) über den zweiten Powerpin (426) eine zweite Spannung zuzuführen,
wobei die erste Spannung sich von der zweiten Spannung unterscheidet.

5. Netzwerkschalter nach einem der Ansprüche 3 bis 4, wobei die elektrische Schnittstelle (310; 410) eine Spannungswandlerschaltung beinhaltet.

6. Netzwerkschalter nach einem der Ansprüche 3 bis 5, wobei die Leistungskomponente konfiguriert ist, um:
der optischen Schnittstelle (308; 408B) über den ersten Powerpin (446B) einen ersten Strom zuzuführen; und
der elektrischen Schnittstelle (310; 410) über den zweiten Powerpin (426) einen zweiten Strom zuzuführen,
wobei der erste Strom sich von dem zweiten Strom unterscheidet;
wobei optional die elektrische Schnittstelle (310; 410) eine Stromverstärkungsschaltung beinhaltet.

7. Netzwerkschalter nach einem der Ansprüche 3 bis 6, ferner umfassend:
ein Substrat (200; 304; 404), auf dem die optische Schnittstelle (308; 408B) und die elektrische Schnittstelle (310; 410) montiert sind,
wobei das Substrat (200; 304; 404) fest an der gedruckten Leiterplatte (302; 402) angebracht ist;
optional ferner umfassend:
einen Prozessor (206; 306; 406), der mit einer Routingtabelle konfiguriert ist, um jede der optischen Schnittstelle (308; 408B) und der elektrischen Schnittstelle (310; 410) mit mindestens einer anderen Schnittstelle zu verbinden.

8. Netzwerkschalter nach Anspruch 7, wobei das Substrat (200; 304; 404) beinhaltet:
eine erste elektrische Leiterbahn, welche den Prozessor (206; 306; 406) und die optische Schnittstelle (308; 408B) elektrisch miteinander verbindet; und
eine zweite elektrische Leiterbahn, welche den Prozessor (206; 306; 406) und die elektrische Schnittstelle (310; 410) elektrisch miteinander verbindet;
wobei optional die erste elektrische Leiterbahn und die zweite elektrische Leiterbahn innerhalb des Substrats (200; 304; 404) eingebettet sind.

9. Verfahren zum Herstellen von Netzwerkschaltern (104), die eine oder mehrere Schnittstellen aufweisen, die mit optischen Schnittstellen und elektrischen Schnittstellen interoperabel sind, das Verfahren umfassend:
Empfangen eines Substrats (200; 304; 404), das geeignet ist, um darauf montierte Elemente elektrisch zu trennen;
Montieren eines Prozessors (206; 306; 406) auf dem Substrat (200; 304; 404); Montieren einer optischen Schnittstelle (202A; 202B; 308; 408B) auf dem Substrat (200; 304; 404); wobei die optische Schnittstelle (202A; 202B; 308; 408B) konfiguriert ist, um sich mit einem faseroptischen Kabel zu verbinden;
elektrisches Verbinden der optischen Schnittstelle (202A; 202B; 308; 408B) mit dem Prozessor (206; 306; 406) unter Verwendung einer ersten elektrischen Leiterbahn;
Montieren einer elektrischen Schnittstelle (204A, 204B; 310; 410) an dem Substrat (200; 304; 404), wobei die elektrische Schnittstelle (204A; 204B; 310; 410) konfiguriert ist, um sich mit einem kupferbasierten Kabel zu verbinden; und
elektrisches Verbinden der elektrischen Schnittstelle (204A; 204B; 310; 410) mit dem Prozessor (206; 306; 406) unter Verwendung einer zweiten elektrischen Leiterbahn;
wobei ein erster Powerpin (446B) der optischen Schnittstelle (202A; 202B; 308; 408B) und ein zweiter Powerpin (426) der elektrischen Schnittstelle (204A; 204B; 310; 410) eine identische Powerpinposition teilen.

10. Verfahren nach Anspruch 9, wobei die erste elektrische Leiterbahn oder die zweite elektrische Leiterbahn mindestens teilweise durch das Substrat (200; 304; 404) freigelegt sind.

11. Verfahren nach Anspruch 9 oder 10, ferner umfassend:
Installieren einer Spannungswandlerschaltung an der optischen Schnittstelle (202A; 202B; 308; 408B),
wobei die Spannungswandlerschaltung konfiguriert ist, um Spannung, die an dem ersten Powerpin (446B) empfangen wird, abzuspannen.

12. Verfahren nach einem der Ansprüche 9 bis 11, ferner umfassend:
Installieren einer Spannungswandlerschaltung an der elektrischen Schnittstelle (204A; 204B; 310; 410),
wobei die Spannungswandlerschaltung konfiguriert ist, um Spannung, die an dem zweiten Powerpin (426) empfangen wird, aufzuspannen.

13. Verfahren nach einem der Ansprüche 9 bis 12, ferner umfassend:
Installieren einer Stromverstärkungsschaltung an der optischen Schnittstelle (202A; 202B; 308; 408B),
wobei die Stromverstärkungsschaltung konfiguriert ist, um Strom, der an einem Powerpin (446B) empfangen wird, zu verstärken.

14. Verfahren nach einem der Ansprüche 9 bis 13, wobei die optische Schnittstelle (202A; 202B; 308; 408B), und die elektrische Schnittstelle (20A; 204B; 310; 410)im Wesentlichen identische Mengen an elektrischer Leistung verbrauchen, da die zweite elektrische Leiterbahn kürzer ist als die erste elektrische Leiterbahn.

## Revendications

1. Commutateur de réseau, comprenant:
une interface optique (202A, 202B; 308; 408B) configurée pour s'interconnecter avec un câble à fibres optiques et comportant une première broche d'alimentation (446B);
une interface électrique (204A, 204B; 310; 410) configurée pour s'interconnecter avec un câble à base de cuivre et comportant une seconde broche d'alimentation (426); et
un processeur (206; 306; 406) couplé de manière fonctionnelle à l'interface optique (202A, 202B; 308; 408B) et à l'interface électrique,
l'interface optique (202A, 202B; 308; 408B) et l'interface électrique (204A, 204B; 310; 410) étant configurées pour consommer des quantités différentes d'énergie électrique et les première et seconde broches d'alimentation (446B, 426) étant disposées au niveau d'une position de broche d'alimentation identique (426, 446B).

2. Commutateur de réseau selon la revendication 1, dans lequel l'interface optique (202A, 202B; 308; 408B) comprend un circuit transformateur de tension configuré pour abaisser une tension reçue au niveau de la première broche d'alimentation (446B); et/ou
dans lequel l'interface électrique (204A, 204B; 310; 410) comprend un circuit transformateur de tension configuré pour élever une tension reçue au niveau de la seconde broche d'alimentation (426).

3. Commutateur de réseau selon la revendication 1 ou 2, comprenant en outre:
une carte de circuits imprimés (302; 402) comprenant un composant d'alimentation configuré pour fournir de manière commandée de l'énergie à la première broche d'alimentation (446B) de l'interface optique (308; 408B) et à la seconde broche d'alimentation (426) de l'interface électrique (310; 410).

4. Commutateur de réseau selon la revendication 3, dans lequel le composant d'alimentation est configuré pour:
fournir une première tension à l'interface optique (308; 408B) par l'intermédiaire de la première broche d'alimentation (446B); et
fournir une seconde tension à l'interface électrique (310; 410) par l'intermédiaire de la seconde broche d'alimentation (426),
la première tension étant différente de la seconde tension.

5. Commutateur de réseau selon l'une quelconque des revendications 3 à 4, dans lequel l'interface électrique (310; 410) comprend un circuit transformateur de tension.

6. Commutateur de réseau selon l'une quelconque des revendications 3 à 5, dans lequel le composant d'alimentation est configuré pour:
fournir un premier courant à l'interface optique (308; 408B) par l'intermédiaire de la première broche d'alimentation (446B); et
fournir un second courant à l'interface électrique (310; 410) par l'intermédiaire de la seconde broche d'alimentation (426),
le premier courant étant différent du second courant;
de manière facultative, l'interface électrique (310; 410) comprenant un circuit élévateur de courant.

7. Commutateur de réseau selon l'une quelconque des revendications 3 à 6, comprenant en outre:
un substrat (200; 304; 404) sur lequel l'interface optique (308; 408B) et l'interface électrique (310; 410) sont montées,
le substrat (200; 304; 404) étant fixé de manière fixe à la carte de circuits imprimés (302; 402);
de manière facultative, comprenant en outre:
un processeur (206; 306; 406) configuré avec une table de routage pour connecter chacune de l'interface optique (308; 408B) et de l'interface électrique (310; 410) à au moins une autre interface.

8. Commutateur de réseau selon la revendication 7, dans lequel le substrat (200; 304; 404) comprend:
une première trace électrique qui interconnecte électriquement le processeur (206; 306; 406) et l'interface optique (308; 408B); et
une seconde trace électrique qui interconnecte électriquement le processeur (206; 306; 406) et l'interface électrique (310; 410);
de manière facultative, la première trace électrique et la seconde trace électrique étant intégrées à l'intérieur du substrat (200; 304; 404).

9. Procédé de fabrication de commutateurs de réseau (104) ayant une ou plusieurs interfaces qui sont interexploitables avec des interfaces optiques et des interfaces électriques, le procédé comprenant:
recevoir un substrat (200; 304; 404) approprié pour séparer électriquement des éléments montés sur celui-ci;
monter un processeur (206; 306; 406) sur le substrat (200; 304; 404);
monter une interface optique (202A, 202B; 308; 408B) sur le substrat (200; 304; 404), l'interface optique (202A, 202B; 308; 408B) étant configurée pour s'interconnecter avec un câble à fibres optiques;
interconnecter électriquement l'interface optique (202A, 202B; 308; 408B) au processeur (206; 306; 406) à l'aide d'une première trace électrique;
monter une interface électrique (204A, 204B; 310; 410) sur le substrat (200; 304; 404), l'interface électrique (204A, 204B; 310; 410) étant configurée pour s'interconnecter avec un câble à base de cuivre; et
interconnecter électriquement l'interface électrique (204A, 204B; 310; 410) au processeur (206; 306; 406) à l'aide d'une seconde trace électrique;
une première broche d'alimentation (446B) de l'interface optique (202A, 202B; 308; 408B) et une seconde broche d'alimentation (426) de l'interface électrique (204A, 204B; 310; 410) partageant une position de broche d'alimentation identique.

10. Procédé selon la revendication 9, dans lequel la première trace électrique ou la seconde trace électrique est au moins partiellement exposée à travers le substrat (200; 304; 404).

11. Procédé selon la revendication 9 ou 10, comprenant en outre:
installer un circuit transformateur de tension sur l'interface optique (202A, 202B; 308; 408B),
le circuit transformateur de tension étant configuré pour abaisser une tension reçue au niveau de la première broche d'alimentation (446B).

12. Procédé selon l'une quelconque des revendications 9 à 11, comprenant en outre:
installer un circuit transformateur de tension sur l'interface électrique (204A, 204B; 310; 410),
le circuit transformateur de tension étant configuré pour élever une tension reçue au niveau de la seconde broche d'alimentation (426).

13. Procédé selon l'une quelconque des revendications 9 à 12, comprenant en outre:
installer un circuit élévateur de courant sur l'interface optique (202A, 202B; 308; 408B),
le circuit élévateur de courant étant configuré pour amplifier un courant reçu au niveau d'une broche d'alimentation (446B).

14. Procédé selon l'une quelconque des revendications 9 à 13, dans lequel l'interface optique (202A, 202B; 308; 408B) et l'interface électrique (204A, 204B; 310; 410) consomment sensiblement des quantités identiques d'énergie électrique en raison du fait que la seconde trace électrique est plus courte que la première trace électrique.
